# EUROPEAN PATENT SPECIFICATION

(11) **EP 2 746 847 B1**
(45) Date of publication and mention of the grant of the patent: **25.05.2016**
(21) Application number: 12870593.6
(22) Date of filing: 11.10.2012
(51) Int. Cl.: B32B 27/30, G02F 1/153, G02F 1/161, B60R 1/08

(54) **ELECTROCHROMIC MIRROR**
ELEKTROCHROMER SPIEGEL
MIROIR ÉLECTROCHIMIQUE

(30) Priority: 03.03.2012 JP 2012047447
(43) Date of publication of application: 25.06.2014
(73) Proprietor: Kabushiki Kaisha Honda Lock, Miyazaki-shi, Miyazaki 880-0293 (JP)
(72) Inventor: KUKITA, Tomoyuki, Miyazaki-shi Miyazaki 880-0293 (JP)
(74) Representative: Weickmann & Weickmann PartmbB
(86) International application number: PCT/JP2012/076345
(87) International publication number: WO 2013/132688

(56) References cited:
- EP-A1- 0 950 568
- WO-A1-2011/083734
- JP-A- 2005 099 606
- JP-A- 2006 119 374
- JP-A- 2010 009 913
- JP-A- 2010 055 018

## Description

### TECHNICAL FIELD

The present invention relates to electrochromic mirrors. Particularly, the present invention relates to an electrochromic mirror in which a protective insulating synthetic resin layer is used as a protective base material for protecting an electrochromic device of the electrochromic mirror from an external environment in which the electrochromic mirror is used. The protective insulating synthetic resin layer provides an excellent comprehensive protective feature including various environmental resistances indispensable to an electrochromic mirror. The protective insulating synthetic resin layer is lightweight, and can be easy produced and processed.

### BACKGROUND ART

For example, in a rear view mirror for a motor vehicle, an electrochromic mirror has been put into practical use as an automobile rear-view mirror for preventing glare in night driving or the like. The electrochromic mirror includes a coloring film and an electrolyte film, which are disposed between a frontside (visible side) substrate and a backside (reflective side) substrate of the mirror. The coloring film is colored/decolored by oxidation/reduction reaction. The electrolyte film exchanges proton (H+) with the coloring film. In the electrochromic mirror, protons are supplied to or drawn from chromogenic materials at the time of turning on-off voltage to color/decolor the chromogenic materials. As a result, the reflectivity of the mirror can be varied. Thus, the electrochromic mirror prevents glare from an image reflecting on the surface of the mirror.

In such a conventional electrochromic mirror, in addition to the glass substrate on the frontside of the mirror, a glass substrate for protecting the electrochromic device is disposed on the backside opposite to the glass substrate on the frontside of the mirror, for providing the mirror with the properties of insulation, waterproof/moisture-proof, anticorrosion, abrasion resistance, and the like against various kinds of factors of degradation of the electrochromic mirror due to the usage environment.

The composite glass substrate as described above is advantageous in that the glass offers comprehensive protection against various environmental factors of degradation of the electrochromic device. However, the composite glass substrate is not a flexible material, and therefore not readily producible or processable. The composite glass substrate is also associated with the risk of damage by stress or shock. Further, because the glass substrate is heavy in weight. Thus, if the glass substrate is mounted to the body of a vehicle in a cantilever fashion, the entire glass substrate is subjected to large vibrations during driving. Thus, a structure is required to compensate for the disadvantage that the vibrations make it difficult for the driver to view the mirror reflective surface.

Hence, it has been proposed to use a synthetic resin material, which is lighter and more easily processable, as the backside substrate, which does not require transparency, instead of the common glass and to cover the electrochromic device with a resin-coating layer (see Patent Document 1). The resin coating is lighter than glass. A uniform, highly adhesive protection coating can be formed at necessary portions of the device by simple coating.

However, in the electrochromic mirror that utilizes the coloring reaction by ion exchange, it is particularly necessary to suppress the entry of ions that exist in the atmosphere as the operating environment. In the electrochromic device, when a voltage is applied to an electrolyte film, a small amount of water present in the electrolyte film undergoes hydrolysis, resulting in migration of cations (protons) in the electrochromic layer. As a result, for example, the following oxidation/reduction reactions are caused in the coloring film.

### <Electrochromic film> <When decolored> <When colored>

(1) Oxidation coloring film IrₙOₓ film: Ir(OH)ₙ + xOH⁻ ←→ Ir(OH)ₙ₊ₓ + xe⁻
(2) Solid electrolyte film Ta₂O₅ film: Ta₂O₅ + xH₂O ←→ Ta₂O₅ + xH⁺+xOH⁻
(3) Reduction coloring film WO₃ film : WO₃ + xH⁺ + xe⁻ ←→ HₓWO₃

In the above reactions, H⁺ ion (proton) exchange takes place in each coloring film. Further, by the turning on-off voltage to the electrolyte film, the coloring or decoloring reaction by oxidation/reduction is repeated. When, for example, a cation contained in the atmosphere, such as Na⁺, enters the electrochromic device, the proton conductivity is decreased, whereby the reactions are disadvantageously inhibited. As a result, the expected anti-glare effect cannot be obtained.

In Patent Document 1 and the corresponding European application EP0950568, on which the preamble of claim 1 is based, the density of an organic silicon or urethane polymer used as a synthetic resin material is increased by a cross-linked structure. Further, the resin film contains metal oxide, ceramic, or glass powder so as to prevent the entry of ions into the electrochromic device. However, the resultant effect is not necessarily sufficient.

The present inventor has previously proposed using an ion insulating metal oxide film of Al₂O₃ or Ta₂O₅, for example, as the backside base material of the electrochromic mirror (see Patent Document 2) so as to prevent the entry of ions in the atmosphere into the electrochromic device. The ion insulating oxide film can reliably prevent the entry of Na⁺ ions and the like present in the atmosphere into the mirror by the metal oxide, such as Al₂O₃ or Ta₂O₅. Such metal oxide film can be formed in the same vapor deposition apparatus and by the same process, such as vapor deposition, as used for forming an electrode film, an oxdation--reduction coloring film, an electrolyte film, or a reflective layer of the electrochromic device, by changing only the conditions. Thus, the metal oxide films are advantageous from the manufacturing process point of view.

### CITATION LIST

### PATENT LITERATURES

Patent Document 1: JP-A-2000-2895
Patent Document 2: JP-A-2005-99606

### DISCLOSURE OF THE INVENTION

### PROBLEMS TO BE SOLVED BY THE INVENTION

However, depending on the film thickness of such as oxide, the electrochromic mirror described in Patent Document 2 may elute water-absorbing WO₃ from the end face of the laminated layers due to water entering via a pinhole in the oxide. As a result, the inherent coloring reaction may be interfered, or corrosion of Al in the reflective film may occur. Thus, it is desired to further coat the entire electrochromic device with a waterproof/anticorrosion layer, for example.

In view of the problems discussed above, the present invention provides an electrochromic mirror such that the entire electrochromic device can be further covered with a waterproof/anticorrosive protection film, and such that the protection film can be easily formed.

The present inventor conducted experiments and researches on various synthetic resin materials for the base material for external coating of the electrochromic mirror. Specifically, the inventor searched for synthetic resins that comprehensively provide various inherent protection functions with respect to properties of the usage environment, such as electrical insulation, ion insulation, water/humidity resistance, chemical resistance, heat resistance, and mechanical strength, and that renders itself to reliable formation of a coating film for a protective insulating layer over an entire surface of the electrochromic mirror through a simple coating operation process.

During the search for materials for the protective insulating layer of the electrochromic mirror, the present inventor focused attention on fluorine resins with excellent properties for weather resistance, heat resistance, chemical resistance, and so on. Most fluorine resins are insoluble to solvents, and do not render themselves to easy coating in the form of a solution. Some of copolymers of a fluorine monomer and another copolymerizable monomer that is easily soluble in solvent are known to be solvable in solvent and are being used for paint applications. However, the base material for coating the electrochromic mirror needs to satisfy various usage environment conditions inherent to the intended use thereof, as described above, in addition to having solubility in solvent.

The present inventor has studied the solvent-soluble fluorine resins in search of a fluorine resin that satisfies the various characteristics required of the protective insulating layer for the electrochromic mirror at practical levels. The experiments and researches conducted by the present inventor led to a specific fluorine copolymer resin that satisfies the requirements, and the present invention was made.

### SOLUTIONS TO THE PROBLEMS

In an electrochromic mirror according to the present invention, layers constituting an electrochromic device are successively laminated on a frontside glass substrate, as is defined in claim 1. Further, a reflective-film side on a rear side opposite to the frontside glass substrate is coated with a protective insulating layer. An outer surface of the electrochromic device is coated with a fluorine copolymer resin paint as the protective insulating layer. The fluorine copolymer resin paint includes a copolymer of a fluoroolefin monomer and an acrylate monomer that forms a solvent-soluble copolymer by copolymerizing with the fluoroolefin monomer.

Preferably, in the fluorine copolymer resin according to the present invention, the fluoroolefin monomer may be a perfluoro alkyl monomer, and the acrylate monomer may be an alkyl acrylate monomer.

According to the present invention, all of external surfaces including laminated end faces of the respective laminated films may be covered with the protective insulating layer.

Preferably, according to the present invention, the electrochromic mirror may include an electrically conductive member disposed at an outer edge of the laminated end faces, the electrically conductive member providing an electrode for the electrode/reflective film and the transparent electrode film. Preferably, the electrically conductive member and the laminated end faces may be coated with the protective insulating layer.

Preferably, according to the present invention, the protective insulating layer may have a coating thickness of 1 µm or more.

### EFFECTS OF THE INVENTION

The fluorine copolymer resin of the solvent-soluble fluoroolefin-acrylate copolymer is soluble in a normal solvent. The solution can be easily coated on the outer surface of the electrochromic device to form a uniformly coated film. In the coating film, fluorine atoms of the fluoro alkyl monomer is locally present in the coated film surface at high density due to the surface mobility of the atoms. Thus, the entry of water, salt content, various chemical substance, ions, or the like from the atmosphere into the electrochromic device can be adequately prevented.

The assumed environmental factors that may degrade the electrochromic mirror are varied, including water, humidity, salt water, various chemical agents, cold/hot cycles, applied voltage, and mechanical shock, as described above. The influence of the factors on the electrochromic mirror may appear in the form of defects, such as a decrease in reflective performance, corrosion or peeling of the constituent films, and elution of chromogenic material.

According to the present invention, the electrochromic mirror is fabricated using the solvent-soluble, specific fluorine copolymer resin in the protective insulating layer. As will be described with reference to an example below, an experiment was conducted, assuming various cases in which the environment factors act on the electrochromic mirror. As a result, it has been confirmed that the influence on the durability of the electrochromic mirror can be prevented in each case at practically permissible level.

In the tests, specific film thicknesses of the protective insulating film for obtaining a sufficient effect on each item is determined. Then, based on the determined film thicknesses, an electrochromic mirror with excellent reflective usage environment resistance can be provided.

The fluorine copolymer resin in which the fluoroolefin monomer is a perfluoro alkyl monomer and the acrylate monomer is an alkyl acrylate monomer has higher solubility to solvent and therefore enables the formation of a uniform and dense coating layer readily. The resultant protective insulating layer satisfies various protection functions for electrochromic mirror applications in a practical manner.

As described above, the protective insulating layer according to the present invention provides satisfactory coating property. Thus, when the electrically conductive members as power supply terminals are deposed on the external surfaces including the laminated end faces of the constituent layers of the mirror and on the laminated end faces, the protective insulating layer according to the present invention can cover all the external surfaces thereof and can be coated with the protective insulating layer in a satisfactory manner. Namely, the entire mirror can be completely coated with the protective insulating layer and thereby protected.

When the film thickness of the coating layer as the protective insulating layer is 1 µm or more, the coating layer can provide a sufficient protection function.

### BRIEF DESCRIPTION OF THE DRAWINGS

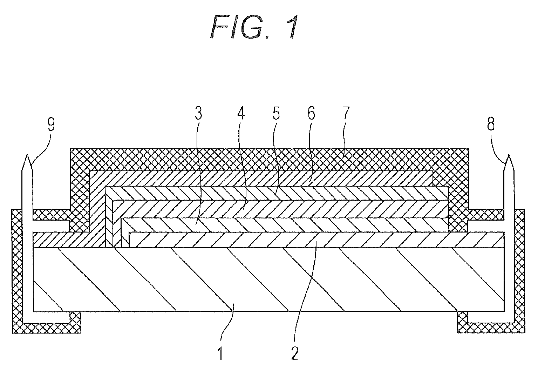

FIG. 1 is a cross sectional view of an electrochromic mirror, illustrating the outline of an embodiment of the present invention.

### BEST MODE FOR CARRYING OUT THE INVENTION

A preferred embodiment of the electrochromic mirror according to the present invention includes a configuration illustrated in FIG. 1, for example.

The electrochromic mirror includes a glass substrate 1 on a frontside. On the glass substrate 1, a transparent electrode film 2, an oxidation coloring film 3, a solid electrolyte film 4, a reduction coloring film 5, and an electrode/reflective film 6 are laminated in that order. To the electrode films 2 and 6, electrically conductive clips 8 and 9 are bonded, respectively, thus forming external power supply terminals. The thus formed electrochromic device includes a protective insulating layer 7 coated on an upper surface of the upper-most layer of the laminated body, i.e., the electrode/reflective film 6, and on laminated end faces of the films, including the electrically conductive clips.

### Frontside glass substrate

The frontside glass substrate 1 requires translucency as a normal mirror substrate. Representative examples of the material of the glass substrate 1 include various glasses, such as phosphorous silicate glass, soda-lime glass, and float glass. Another example of the transparent material for the substrate 1 with a protection function similar to glass is an appropriate synthetic resin material.

### Transparent electrically conductive film

The transparent electrically conductive film 2 is a film that functions as an electrode for applying voltage to the electrochromic device. For the transparent electrically conductive film 2, an electrically conductive material with high transmittance is used. Specifically, metals such as gold, silver, platinum, or rhodium, or metal oxides such as ITO, SnO₂, or ZnO may be used.

A thin film of such material is formed in close contact with the glass plate as the surface substrate 1, by a well-known film forming process, such as ion plating. The thin film has a thickness of approximately 2000 Å (200 nm), for example.

### Oxidation coloring film

The oxidation coloring film 3 is an oxidation coloring film disposed in contact with the transparent electrically conductive film 2. The oxidation coloring film 3 is colored or decolored, together with the reduction coloring film 5 described below, by exchanging protons with the adjacent electrolyte film upon turning on-off voltage to the electrochromic mirror. The material of the film may be in the form of a solution, a gel, or a solid. Preferably, a solid material may be used. Specific examples include IrOₓ, NiOₓ, RhOₓ, and Cr₂O₃.

A thin film of such material is formed on the transparent electrode 2 in a laminated and closely contacted manner by a well-known film forming process, such as ion plating. The thin film has a thickness of approximately 1000 Å, for example.

### Electrolyte film

The electrolyte film 4 is disposed in contact with the oxidation coloring film 3. The electrolyte film 4 causes the oxidation coloring film 3 and the reduction coloring film 5 to be colored or decolored by the oxidation/reduction reaction based on the exchange of protons produced by electrolysis of a small amount of water when the electrochromic mirror is energized. By varying the amount of light that is passed through the electrochromic mirror, an anti-glare effect is provided by a difference in reflectivity when decolored and when colored. The electrolyte may come in the form of a solution, a gel, or a solid. According to the present invention, a solid electrolyte is used. Specific examples include solid electrolytes that have electrical insulating property and ion conductivity, such as Ta₂O₅, Nb₂O₅, ZrO₂, La₂O₃, LaNi₅, and HfO₂.

A thin film of such material is formed between the reduction coloring film 3 and the reduction coloring film 5 in a laminated and closely contacted manner also by a well-known film forming process, such as ion plating. The thin film has a thickness of approximately 5000 Å (500 nm), for example.

### Reduction coloring film

The reduction coloring film 5 is a coloring film disposed in contact with the electrolyte film 4. The reduction coloring film 5 is colored or decolored through proton exchange, as in the case of the oxidation coloring film. The reduction coloring film 5 provides an anti-glare effect by mirror coloring, in combination with the coloring or decoloring of the oxidation coloring film 3. Specific examples of the material include metal oxides, such as WO₃, MoO₃, and V₂O₅. The reduction coloring film 5 is formed on the solid electrolyte film 4 in closely contacted manner by a well-known film forming process, such as electron beam vapor deposition, and has a thickness of approximately 5000 Å (500 nm), for example.

### Electrode/reflective film

The electrode/reflective film 6 is a member that functions as a reflective film that reflects incident light that has passed through the electrochromic mirror toward the frontside glass substrate 1, and as another electrode film of the electrochromic device. The electrode/reflective film 6 is selected from materials with high surface reflectivity and high electrical conductivity. Specific examples include thin films of Al, Cr, and Ag.

A thin film of such material formed on the reduction coloring film 5 in a laminated and closely contacted manner by a well-known film forming process, such as resistance heating vapor deposition, to a thickness of approximately 1000 Å (100 nm), for example.

### Protective insulating layer

The protective insulating layer 7 has the function of protecting the electrochromic device by, for example, coating the outer surface of the electrode/reflective film 6 disposed in the upper-most layer of the electrochromic device. The protective insulating layer 7 is a characteristic layer of the present invention that replaces the backside glass substrate used in conventional electrochromic mirrors. The protective insulating layer 7 is formed from a fluorine copolymer resin that is soluble in solvent. The protective insulating layer 7 is formed by a normal coating process as a uniform coating film that covers the laminated end faces of the respective layers including the electrically conductive clip portions (electrically conductive members) 8 and 9 on the outer surface.

### Solvent-soluble fluorine copolymer resin

Generally, fluorine resins contain extremely stable fluorine atoms bonded to the carbon atoms of a main chain. Thus, fluorine resins have excellent weather resistance, heat resistance, and resistance to chemicals. Fluorine resins are conventionally used for various purposes, such as in the form of a so-called super engineering resin.

Because most fluorine resins are insoluble to solvents, the use of fluorine resins for paint purposes is limited. However, it is known that some fluorine resins can be rendered soluble to solvents by forming a copolymer with another hydrocarbon monomer that is copolymerizable with a fluoromonomer and that is soluble to solvents. Paint-purpose resins using such copolymers have already been put into production.

As described above, there is a wide variety of usage environmental factors causing degradation of the electrochromic mirror. However, no cases are known in which the above-described fluorine resin paint is applied in the relevant field. Further, no light has been shed on the relationship between the environment factors and inherent defects of the mirror, such as a decrease in reflective function, color loss, or blurring. Thus, it is not easy to select a fluorine resin paint that has characteristics comprehensively satisfying all of the required various functions and that is relatively low-cost. In addition, it is not easy to evaluate the durability of each individual fluorine resin paint so as to use the resin for actual coating of the electrochromic mirror.

It is relatively easy to copolymerize a fluoroolefin monomer and an acrylate monomer. It is also easy to increase the rate of introduction of fluorine atoms of the fluoroolefin monomer and the acrylate monomer, which is closely related to the protection function. The present inventor focused attention on a fluorine resin paint including such a copolymer, and made an attempt to use a fluorine resin paint including the copolymer as a resin paint for forming the electrochromic mirror protection film, as described in an example below. The present inventor evaluated the resin paint by conducting tests to confirm various functions with regard to durability, the tests involving applying the resin paint to an actual electrochromic mirror.

As a result, the fluorine resin coating film was shown to sufficiently satisfy the various functions required of the electrochromic mirror. For example, the fluorine resin coating film proved superior to coating films that had been conventionally proposed, such as the urethane resin and acrylic resin described in Patent Document 1, in every respect of salt-water resistance test or waterproof test. A comprehensive evaluation of chemical resistance or environmental resistance also showed that the fluorine resin coating film has sufficient durability.

The resin according to the present invention also proved superior in ion insulation property per se when compared with the oxide insulating film according to Patent Document 2, on which Al₂O₃ or Ta₂O₅ is vapor-deposited in an attempt to improve ion insulation property. Further, the resin according to the present invention does not require the complementary anticorrosion coating that may be implemented depending on cases in Patent Document 2. The resin according to the present invention can be provided with the comprehensive protection function including the above functions.

Examples of the fluoroolefin monomer in the solvent-soluble fluorine copolymer resin include chlorotrifluoroethylene, trifluoroethylene, and vinylidene fluorine, in addition to perfluoro alkyl expressed by (CF₂CF₂)ₙCF₃. Particularly, perfluoro alkyl monomer may be preferable.

Examples of the acrylate monomer copolymerizable with fluoroolefin monomer include acrylate monomer and methacrylate monomer, of which acrylate monomer may be preferable. Preferable examples of acrylate monomer include various alkyl esters of acrylic acid, such as alkyl acrylate monomer.

In these fluorine resins, fluorine atoms of the fluoroolefin chain migrate to the surface. Thereby, it is believed, the intended protection function can be extremely effectively obtained on the frontside of the coating film. When an anion, such as OH-, Cl-, or SO₄²⁻, externally acts on a polar group of the acrylate monomer that contains oxygen, a polymer structure may be damaged. However, in the present structure, fluorine atoms are locally present on the surface with high density, and the penetrating ion attack is blocked by the intermolecular force of the atoms. Thus, the durability of the coating film can be maintained even in a high-temperature and high-humidity environment containing large amounts of such ions.

### Other copolymerize component

The fluorine copolymer resin has the superior protection function due to the fluorine atoms in the fluoroolefin monomer. However, the fluorine copolymer resin lacks elasticity as a protection film because the material is rigid. Further, when the fluorine copolymer resin is used in an environment in which cold/hot cycles with large temperature changes are repeated, the coating film may be easily damaged by cracking, for example, due to the lack of thermal elasticity.

When a hydrocarbon monomer that enables the formation of a cross-linked structure and that contains a functional group, such as an OH group or a silyl group, is present in the copolymer, the hydrocarbon monomer functions to provide the copolymer resin with elasticity. Thus, the hydrocarbon monomer containing an OH group or a silyl group may be incorporated into the copolymer resin according to the present invention in addition to the fluoroolefin monomer and the acrylate monomer, so as to provide elasticity providing durability against cold/hot cycles. In addition to such monomers, examples of the comonomer that provide the elasticity exhibiting durability against cold/hot cycles include tetrafluoroethylene (TFE), hexafluoropropylene (HFP), perfluoro ethylene propylene (FEP), perfluoro alkoxyalkane (PFA), ethylene-tetrafluoroethylene (ETFE), tetrafluoroethylene (TFE), hexafluoropropylene (HFP), vinylidene fluoride (VF2), and ethylene-chlorotrifluoroethylene (ECTFE). Examples of copolymers that provide similar elasticity include polytetrafluoroethylene (PTFE), polyvinylidene fluoride (PVDF), polychlorotrifluoroethylene (PCTFE), and polyvinyl fluoride (PVF) copolymers. Any of these may be present in the copolymer.

When the protective insulating layer is formed, a coating film with sufficient protection function can be obtained by a single film forming process, instead of coating multiple layers as according to a conventional coating technique. The coating film may have a thickness of approximately 1 µm or more. According to the example described below, the coating film may preferably have a thickness of 5 µm or more and most preferably 8 µm or more.

### [Example]

A transparent electrode film with a transmittance of 90% or more and a sheet resistance value of 10Ω/□ or less was formed by vapor-depositing an ITO on a glass substrate to a film thickness of 2000 Å by ion plating. Then, also by ion plating, an oxidation coloring film with a transmittance of 80% or more was formed by vapor deposition of IrO₂ + SnO₂ to a total film thickness of 1000 Å (IrO₂: 150 Å, SnO₂: 850 Å). Thereafter, also by ion plating, an electrolyte film with a transmittance of 90% or more was formed to a film thickness of 5000 Å by vapor deposition of Ta₂O₅. On the electrolyte film, a reduction coloring layer with a transmittance of 95% or more was formed by electron beam vapor deposition of WO₃ to a film thickness of 5000 Å. Over, and in contact with, the reduction coloring layer, a reflective/electrode film with a sheet resistivity of 10Ω/□ or more and a reflectivity of 90% or more was formed by vapor deposition, such as resistance heating vapor deposition process, of Al to a thickness of 1000 Å. Electrically conductive clips were connected to the transparent electrode film and the reflective/electrode film respectively, thus forming external feeding terminals.

By thus laminating the layers on the glass substrate, an electrochromic device was formed. The laminated end faces of the respective layers, including the reflective/electrode film on the upper-most surface of the electrochromic device and the frontside glass substrate, and the electrically conductive clips were coated with a paint. The paint was a paint (DURASURF DS-3300 (registered trademark) fluorine coating agent from Harves Co., Ltd.) including a solvent-soluble fluorine copolymer resin (hereafter referred to as "the fluorine copolymer resin") including a copolymer of perfluoro alkyl monomer and alkyl acrylate monomer, dissolved in butyl acetate (or fluorine solvent) (single coat when the paint had 30% fluorine concentration; double coats when the paint had 10% fluorine concentration). The paint was allowed to dry and solidify, whereby an electrochromic mirror was fabricated. In this case, the film thickness was variously set in a range of 0.1 µm to 30 µm depending on various test items as will be described below.

### [Comparative example]

An electrochromic mirror was fabricated in the same way as in the example with the exception that a conventional insulating urethane resin and acrylic resin were used as paints for the protective insulating layer, instead of the fluorine copolymer resin. Another electrochromic mirror was also fabricated as another comparative example. In these electrochromic mirrors, Al₂O₃ for the protective insulating layer was vapor-deposited by ion plating to film thicknesses of 100, 200, and 300 nm (1000, 2000, and 3000 Å).

### [Evaluation of electrochromic mirror characteristics]

The electrochromic mirrors fabricated as described above according to the example of the present invention and the comparative examples were evaluated. The evaluation initially involved tests regarding breakdown resistance (salt water resistance), moisture-proof property, and chemical resistance as representative functions. The evaluation also involved verifying environmental resistance regarding the antiglare performance of the electrochromic mirror, by conducting tests in terms of various items such as change in reflectivity, and color loss or blurring in the appearance of the mirror display.

### Breakdown resistance (salt water resistance)

### - Verification of breakdown resistance by salt water -

A wiring board including a copper pattern with a slit width of 200 µm was coated with the fluorine copolymer resin according to the example. The wiring board was also coated with the insulating urethane resin according to the comparative examples. After drying for one hour or more at room temperature, 3 mL of 5% saline solution was delivered by drops to a slit portion. A DC voltage of 18 V to 19 V was applied to both sides of the pattern.

The application of voltage was continued until the saline solution was completely dried, and the amount of electricity supplied was confirmed with a current meter. When the current exceeded 1000 µA, breakdown was considered to have occurred, and the test was terminated.

**[Table 1]**

| Insulating film material | Insulating urethane resin | | Fluorine copolymer resin | | |
|---|---|---|---|---|---|
| Film thickness | 5 to 8 µm | 10 to 20 µm | 5 to 8 µm | 10 to 20 µm | 20 to 30 µm |
| Time before breakdown | Instantaneous | 3 sec | 4 min | 150 min | 180 min |
| Maximum current value | 1000 µA or more | 1000 µA or more | 650 µA | 2.0 µA | 0.7 µA |

As shown in Table 1, for the same film thickness, the fluorine copolymer resin according to the example of the present invention provides far greater resistance to salt water breakdown compared with the insulating urethane resin according to the comparative examples.

It is noted that the insulation resistance of the resin coating film according to the example of the present invention provides an excellent effect at the film thickness of 5 µm or more. The function significantly increased when the film thickness was around 8 µm or above.

### Moisture-proof property

Water permeability was verified under conditions according to JIS-Z-0208 (40°C, 90%RH).

Water permeability (g/m²/24 h) = Amount of water permeated in 24 hours

**[Table 2]**

| Insulating film material | Insulating urethane resin | | Acrylic resin | | Fluorine copolymer resin | | | |
|---|---|---|---|---|---|---|---|---|
| Film thickness | 3 µm | 10 µm | 3 µm | 10 µm | 1 µm | 3 µm | 10 µm | 20 µm |
| Water permeability | 880 | 300 | 720 | 230 | 320 | 105 | 19 | 0 |

As shown in Table 2, the fluorine copolymer resin coating film according to the example provides superior moisture-proof property to the moisture-proof properties of the urethane resin and the acrylic resin when the film thickness is 1 µm. At the various film thicknesses, the water permeation level was decreased to approximately 1/7 to 1/15 as a whole.

### Thermal conductivity

Thermal conduction was compared between when coated with the protective insulating layer according to the example and when not coated, on the assumption that the electrochromic mirror is fitted with an anti-fog/frost heater. As a result, hardly any difference in thermal conductivity was recognized between the two cases. Thus, it was determined that the protective insulating layer according to the present invention does not produce any substantial problem even in the case of a heater-equipped mirror.

### Chemical resistance

Chemical resistance of the insulating film (perfluoro acrylic copolymer resin) was verified with respect to reagents used or beverages corresponding to various degradation factors that can be expected to affect the electrochromic mirror electrode due to the usage environment.

The verification was based on water repellency and changes in the appearance of the coating film after immersion in supplied reagent products for 360 hours.

**[Table 3]**

| No. | Assumed mode | Reagent name | Thickness of protective insulating film (µm) | | | | | |
|---|---|---|---|---|---|---|---|---|
| | | | 0.1 | 0.5 | 2.0 | 6.0 | 10 | 20 |
| 1 | Acidic rain | 10% sulfuric acid | D | C | C | B | B | A |
| 2 | Bird dropping | 5% caustic soda | D | C | C | B | B | B |
| 3 | Indoor drinking/eating | Orange juice | C | C | C | B | B | A |
| 4 | | Cola | C | C | C | B | B | A |
| 5 | | Green tea | C | C | B | B | B | A |
| 6 | Li battery drive | Lithium battery electrolyte | D | C | C | B | B | A |
| 7 | Coat of paint | Toluene | C | C | C | B | B | B |
| 8 | Oily hand | Olein acid | D | C | C | B | B | B |
| 9 | Assembly line | Mineral oil | C | C | B | B | B | B |
| 10 | Mirror surface stain removal | I.P.A | C | C | C | B | A | A |
| 11 | | Ethanol | C | C | C | B | A | A |
| 12 | | Acetone | C | C | C | B | B | B |
| 13 | Vehicle maintenance | Engine oil | C | C | B | B | B | B |
| 14 | | Battery fluid | D | C | C | B | B | A |
| 15 | Rain water | Pure water | C | C | B | B | B | A |

| | | | | | | | | |
|---|---|---|---|---|---|---|---|---|
| A = 90% or more water repellency was maintained; no change in coating film appearance was observed. B = Water repellency was maintained in a range of not less than 60% and less than 90%; no change in coating film appearance was observed. C = Water repellency was maintained in a range of not less than 40% and less than 60%; no change in coating film appearance was observed. D = Change in appearance, such as peeling, dissolution, discoloration, or cracking was observed. | | | | | | | | |

As shown in Table 3, when the film thickness of the fluorine copolymer resin according to the example was 6 µm or more, practical-level chemical resistance was obtained with respect to the supplied reagent products and the like corresponding to the assumed degradation factors due to the usage environment.

### Environmental resistance (reflectivity, defect on mirror surface, etc.)

Changes in the characteristics (reflectivity difference) of the electrochromic mirrors according to the example and the comparative examples with respect to the environment were measured before and after tests of various items including temperature, high-temperature/high-humidity, dew condensation, immersion in warm water, salt water spray, and cold/hot cycle.

The characteristics of the electrochromic mirrors were evaluated in terms of the difference (reflectivity range) between decolored reflectivity and colored reflectivity that represents the anti-glare effect, and the results are shown in Table 4. After the various tests, the electrochromic mirror was observed for defects such as film peeling, reflective film corrosion, color loss or blurring in appearance, and these were also used as evaluation references.

**[Table 4]**

| Major item | Item | Specimen | | | | | | | |
|---|---|---|---|---|---|---|---|---|---|
| | | Alumina sample 1 | Alumina sample 2 | Alumina sample 3 | Urethane sample | Fluorine resin sample F1 | Fluorine resin sample F2 | Fluorine resin sample F3 | Fluorine resin sample F4 |
| Sample spec | Insulated spec film thickness | alumina film formation 100 nm | alumina film formation 200 nm | alumina film formation 300 nm | anticorrosion coat of paint | fluorine resin coat 100 nm | fluorine resin coat 200 nm | fluorine resin coat 8000 nm | fluorine resin coat 16000 nm |
| Initial | Decolored reflectivity | 69.7 | 68.9 | 70.1 | 67.5 | 71.7 | 70.1 | 70.4 | 71.8 |
| | Colored reflectivity | 9.8 | 8.3 | 8.8 | 8.8 | 8.8 | 9.1 | 9.6 | 9.2 |
| | Reflectivity range | 59.9 | 60.6 | 61.3 | 58.7 | 62.9 | 61.0 | 60.8 | 62.6 |
| After left standing in high-temperature | Decolored reflectivity | 65.7 | 64.2 | 69.6 | 67.8 | 71.1 | 70.3 | 70.5 | 71.4 |
| | Colored reflectivity | 20.8 | 17.6 | 9.1 | 8.8 | 9.1 | 9.2 | 9.2 | 9.0 |
| | Reflectivity range | 44.9 | 46.6 | 60.5 | 59.0 | 62.0 | 61.1 | 61.3 | 62.4 |
| After left standing in low-temperature | Decolored reflecti vity | 65.9 | 65.9 | 69.6 | 67.6 | 71.1 | 70.3 | 70.5 | 71.8 |
| | Colored reflectivity | 19.4 | 15.3 | 9.3 | 8.8 | 9.3 | 8.9 | 9.4 | 9.0 |
| | Reflectivity range | 46.5 | 50.6 | 60.3 | 58.8 | 61.8 | 61.4 | 61.1 | 62.8 |
| After cold/hot cycle | Decolored reflectivity | 65.7 | 64.9 | 69.4 | 67.5 | 70.8 | 70.1 | 70.7 | 71.6 |
| | Colored reflectivity | 21.8 | 17.2 | 9.8 | 8.8 | 9.3 | 8.8 | 9.2 | 9.2 |
| | Reflectivity range | 43.9 | 47.7 | 59.6 | 58.7 | 61.5 | 61.3 | 61.5 | 62.4 |
| After dew condensation test | Decolored reflectivity | 67.7 | 65.3 | 69.1 | 67.5 | 70.8 | 69.5 | 70.4 | 71.1 |
| | Colored reflectivity | 32.8 | 22.3 | 9.2 | 8.8 | 9.1 | 9.1 | 8.9 | 9.2 |
| | Reflectivity range | 34.9 | 43.0 | 59.9 | 58.7 | 61.7 | 60.7 | 61.5 | 61.9 |
| After warm water submersion | Decolored reflectivity | 66.7 | 66.9 | 68.2 | 67.5 | 70.6 | 70.1 | 70.4 | 71.8 |
| | Colored reflectivity | 36.8 | 25.4 | 9.1 | 8.8 | 9.3 | 9.1 | 8.6 | 9.2 |
| | Reflectivity range | 29.9 | 41.5 | 59.1 | 58.7 | 61.3 | 61.0 | 61.8 | 62.6 |
| After high-temperature and high-humidity | Decolored reflectivity | 66.8 | 64.9 | 68.1 | 67.5 | 70.8 | 69.9 | 70.4 | 71.4 |
| | Colored reflectivity | 34.4 | 33.3 | 10.6 | 9.8 | 9.6 | 8.8 | 8.9 | 9.2 |
| | Reflectivity range | 32.4 | 31.6 | 57.5 | 57.7 | 61.2 | 61.1 | 61.5 | 62.2 |
| Salt water spray | Decolored reflectivity | 66.4 | 65.7 | 67.2 | 67.5 | 70.5 | 70.0 | 70.4 | 71.1 |
| | Colored reflectivity | 66.4 | 43.1 | 18.8 | 10.2 | 9.7 | 9.1 | 8.6 | 9.2 |
| | Reflectivity range | 0.0 | 22.6 | 48.4 | 57.3 | 60.8 | 60.9 | 61.8 | 61.9 |

The conditions of the test items shown in Table 4 are as follows:
After left standing in high-temperature: Left standing in environment of temperature of 85°C for 240 hours or more.
After left standing in low-temperature: Left standing in environment of temperature of -40°C for 240 hours or more.
After cold/hot cycle: Left standing in temperature-cycling environment of temperatures between -40 and 80°C for 240 hours or more.
After dew condensation test: Left standing in environment of temperature of 35°C and humidity of 95% after being left standing at temperature of -40°C for 2 hours.
After warm water submersion: Immersed in warm water of 40°C for 240 hours or more.
After left standing in high-temperature and high-humidity; Left standing in environment of temperature of 80°C and humidity of 95% for 240 hours or more.
Salt water spray: Sprayed with salt water of temperature 35°C and concentration of 5 mass% for 960 hours or more.

As shown in Table 4, the changes in reflectivity, mirror appearance, and the like of the electrochromic mirrors according to the example and the comparative examples between when decolored and when colored in the various environment tests are as follows.

### - Coating protection layer according to example -

The change in reflectivity as reflective performance (difference between decolored reflectivity and colored reflectivity: reflectivity range) was satisfactory in the case of the coating film thickness of 100 nm (0.1 µm) to 10000 nm (10 µm). In the coating film thickness of 10 nm to 200 nm, corrosion of the reflective film due to pinhole, or color loss or blurring at the time of coloring was recognized. However, when the film thickness was 8000 nm (8 µm) or more, no such defects were recognized.

### - Al₂O₃ vapor deposition protection layer -

In the Al₂O₃ vapor deposition film, when the film thickness was 0.1 to 0.2 µm, the reflectivity difference was decreased or eliminated in the high temperature/low-temperature shelf test, and reflective power was degraded.

Even when the vapor deposition film thickness was 300 nm (0.3 µm), corrosion developed in the Al reflective film due to pinhole in the high-temperature and high-humidity test. Further, in the salt water test, the reflectivity range was decreased by elution of WO₃, or hardly any reflectivity change was exhibited, thus failing to provide the anti-glare effect.

### - Urethane resin coating protection layer -

The urethane resin coating layer produced no problem in the tests of the various items with respect to the reflectivity range of reflective performance. However, in the salt water spray test, corrosion developed from the outer periphery of the Al reflective film, and the layer was evaluated to be unfit as a protection layer.

The results of the experiments show that in the electrochromic mirror of which the protective insulating layer is formed by using the fluorine copolymer resin according to the present invention as a coating film, reflective performance is not decreased by various environmental variations, and an excellent anti-glare effect can be obtained when the coating film thickness is 8 µm or more. Further, the protective insulating layer can be easily formed by a simple coating process.

### DESCRIPTION OF REFERENCE SIGNS

1: Frontside substrate (glass substrate)
2: Transparent electrode film
3: Oxidation coloring film
4: Solid electrolyte film
5: Reduction coloring film
6: Reflective film/electrode film
7: Protective insulating layer
8, 9: Electrically conductive clip

## Claims

1. An electrochromic mirror including a front side substrate (1) serving as a mirror surface onto which a transparent electrode film (2), an oxidation coloring film (3), an electrolyte film (4), a reduction coloring film (5), a reflective electrode film (6), and a protective insulating layer (7) as a back side base material corresponding to the front side substrate are successively laminated,
wherein:
the protective insulating layer is a coating layer formed of a resin, **characterised in that**
the coating layer is formed of a fluorine copolymer resin including a copolymer of a fluoroolefin monomer and an acrylate monomer that forms a solvent-soluble copolymer by copolymerizing with the fluoroolelin monomer.

2. The electrochromic mirror according to claim 1,
wherein:
the fluoroolefin monomer is a perfluoro alkyl monomer; and
the acrylate monomer is an alkyl acrylate monomer.

3. The electrochromic mirror according to claim 1 or 2, wherein all of an external surface including a laminated end face of each of the respective laminated films are covered with the protective insulating layer.

4. The electrochromic mirror according to claim 3, further comprising an electrically conductive member (8, 9) disposed at an outer edge of the laminated end face, the electrically conductive member providing an electrode for the reflective electrode film and the transparent electrode film,
wherein the electrically conductive member and the laminated end face are coated with the protective insulating layer.

5. The electrochromic mirror according to any one of claims 1 to 4, wherein the protective insulating layer has a coating thickness of 1 µm or more.

## Patentansprüche

1. Elektrochromer Spiegel, der ein Vorderseiten-Substrat (1) enthält, das als Spiegeloberfläche dient, auf die aufeinanderfolgend ein transparenter Elektrodenfilm (2), ein Oxidations-Färbungsfilm (3), ein Elektrolytfilm (4), ein Reduktions-Färbungsfilm (5), ein reflektierender Elektrodenfilm (6) und eine Schutzisolierschicht (7) als Rückseiten-Basismaterial, entsprechend dem Vorderseiten-Substrat, laminiert sind, wobei:
die Schutzisolierschicht eine aus Harz gebildete Beschichtung ist,
**dadurch gekennzeichnet, dass** die Beschichtung aus einem Fluorcopolymerharz gebildet ist, das ein Copolymer eines Fluorolefinmonomers und eines Acrylatmonomers enthält, das ein lösungsmittelösliches Copolymer durch Copolymerisierung mit dem Fluorolefinmonomer bildet.

2. Der elektrochrome Spiegel nach Anspruch 1, wobei das Fluorolefinmonomer ein Perfluoralkylmonomer ist; und das Acrylatmonomer ein Alkylacrylatmonomer ist.

3. Der elektrochrome Spiegel nach Anspruch 1 oder 2, wobei eine gesamte Außenoberfläche, einschließlich einer laminierten Endfläche von jedem der jeweiligen laminierten Filme mit der Schutzisolierschicht abgedeckt sind.

4. Der elektrochrome Spiegel nach Anspruch 3, der ferner ein elektrisch leitfähiges Element (8, 9) aufweist, das an einem Außenrand der laminierten Endfläche angeordnet ist, wobei das elektrisch leitfähige Element eine Elektrode für den reflektierenden Elektrodenfilm und den transparenten Elektrodenfilm bereitstellt, wobei das elektrisch leitfähige Element und die laminierte Endfläche mit der Schutzisolierschicht abgedeckt sind.

5. Der elektrochrome Spiegel nach einem der Ansprüche 1 bis 4, wobei die Schutzisolierschicht eine Beschichtungsdicke von 1 µm oder mehr aufweist.

## Revendications

1. Miroir électrochromique comportant un substrat côté avant (1) servant de surface de miroir sur laquelle un film d'électrode transparent (2), un film colorant d'oxydation (3), un film d'électrolyte (4), un film colorant de réduction (5), un film d'électrode réfléchissant (6), et une couche isolante protectrice (7) en tant que matériau de base côté arrière correspondant au substrat côté avant sont successivement stratifiés,
dans lequel :
la couche isolante protectrice est une couche de revêtement formée d'une résine, **caractérisé en ce que**
la couche de revêtement est formée d'une résine de copolymère fluoré comportant un copolymère d'un monomère de fluorooléfine et d'un monomère d'acrylate qui forme un copolymère soluble dans un solvant par copolymérisation avec le monomère de fluorooléfine.

2. Miroir électrochromique selon la revendication 1,
dans lequel :
le monomère de fluoro-oléfine est un monomère perfluoroalkyle ; et
le monomère d'acrylate est un monomère d'acrylate d'alkyle.

3. Miroir électrochromique selon la revendication 1 ou 2, dans lequel la totalité d'une surface externe comportant une face d'extrémité stratifiée de chacun des films stratifiés respectifs est recouverte par la couche isolante protectrice.

4. Miroir électrochromique selon la revendication 3, comprenant en outre un organe électriquement conducteur (8, 9) disposé au niveau d'un bord externe de la face d'extrémité stratifiée, l'organe électriquement conducteur fournissant une électrode pour le film d'électrode réfléchissant et le film d'électrode transparent,
dans lequel l'organe électriquement conducteur et la face d'extrémité stratifiée sont revêtus de la couche isolante protectrice.

5. Miroir électrochromique selon l'une quelconque des revendications 1 à 4, dans lequel la couche isolante protectrice a une épaisseur de revêtement de 1 µm ou plus.
